# EUROPEAN PATENT APPLICATION

(11) **EP 4 541 878 A1**
(43) Date of publication of application: **23.04.2025**
(21) Application number: 22946825.1
(22) Date of filing: 15.06.2022
(51) Int. Cl.: C12M 1/00

(54) **BUNDLING MEMBER-EQUIPPED REAGENT CONTAINER AND TESTING DEVICE**

(71) Applicant: HITACHI HIGH-TECH CORPORATION, Tokyo 105-6409 (JP)
(72) Inventor: HOKARI, Junpei, Tokyo 100-8280 (JP); YAMAGATA, Toshiki, Tokyo 105-6409 (JP); SHIBAHARA, Masashi, Tokyo 105-6409 (JP)
(74) Representative: MERH-IP Matias Erny Reichl Hoffmann Patentanwälte PartG mbB
(86) International application number: PCT/JP2022/023992
(87) International publication number: WO 2023/243006

(57) **Abstract**

A binding-member-attached reagent container includes a plurality of reagent containers provided in series and in contact with each other, and a detachable strip-shaped binding member integrally surrounding the plurality of reagent containers. An inspection device is an inspection device allowing the binding-member-attached reagent container to be loaded therein, and includes a storage rack having, at an upper portion thereof, a loading port through which the binding-member-attached reagent container is loaded, and configured to allow the binding-member-attached reagent container to be loaded such that the plurality of reagent containers are stacked in a vertical direction. The storage rack is provided with an opening portion such that the binding member of the loaded binding-member-attached reagent container is detachable from an outside.

## Description

### BACKGROUND OF THE INVENTION

### 1. Field of the Invention

The present invention relates to a binding-member-attached reagent container and an inspection device.

### 2. Description of Related Art

As a device for inspecting a biological sample, for example, a device for analyzing the biological sample using a reagent is known.

In such an inspection device, for example, a plurality of reagent containers are collectively stored in advance, in order to allow a large number of inspections to be efficiently performed.

As the device capable of storing a plurality of reagent containers as described above, for example, a biological sample analysis instrument is proposed which includes a plate loading assembly capable of storing a large number of reagent containers by individually placing each of a plurality of plate-shaped reagent containers on a nest of a plate rack (for example, see PTL 1).

### Citation List

### Patent Literature

PTL 1: JP2017-523809A

### SUMMARY OF THE INVENTION

However, in the related-art biological sample analysis instrument as described above, since the plates are set on the nest of the plate rack while being gripped one by one, it takes time and effort to set the plates, and there is also a risk that the reagents are contaminated when a user operates the plates.

The invention has been made in view of the above circumstances, and an object of the invention is to provide a binding-member-attached reagent container allowing a plurality of reagent containers to be integrally operated and capable of preventing a reagent from being contaminated without directly touching the reagent containers, and an inspection device using the binding-member-attached reagent container.

According to one aspect of the present disclosure, a binding-member-attached reagent container includes a plurality of reagent containers provided in series and in contact with each other, and a detachable strip-shaped binding member integrally surrounding the plurality of reagent containers.

According to another aspect of the present disclosure, an inspection device allowing the binding-member-attached reagent container to be loaded therein includes a storage rack having, at an upper portion thereof, a loading port through which the binding-member-attached reagent container is loaded, and configured to allow the binding-member-attached reagent container to be loaded such that the plurality of reagent containers are stacked in a vertical direction. The storage rack is provided with an opening portion such that the binding member of the loaded binding-member-attached reagent container is detachable from an outside.

The invention can provide a binding-member-attached reagent container allowing a plurality of reagent containers to be integrally operated and preventing a reagent from being contaminated without directly touching the reagent containers, and an inspection device using the binding-member-attached reagent container.

### BRIEF DESCRIPTION OF THE DRAWINGS

FIG. 1 is a schematic side view showing a first embodiment.
FIG. 2 is a schematic perspective view showing a reagent container in FIG. 1, and shows a state in which a part of a lid body is cut out.
FIG. 3 is a schematic block diagram showing a second embodiment.
FIG. 4A is a schematic perspective view showing a reagent container storage unit in FIG. **3****.**
FIG. 4B is a schematic perspective view showing the reagent container storage unit in FIG. **3****.**
FIG. 4C is a schematic perspective view showing the reagent container storage unit in FIG. 3.
FIG. 5 is a schematic perspective view showing a usage state according to the second embodiment, and shows a state in which a binding-member-attached reagent container is being loaded into a storage rack.
FIG. 6 is a schematic perspective view showing the usage state according to the second embodiment, and shows a state in which a binding member is being removed.
FIG. 7 is a schematic perspective view showing the usage state according to the second embodiment, and shows a state in which the binding member is removed.
FIG. 8 is a schematic side view showing a modification of the first embodiment.
FIG. 9 is a schematic perspective view showing a modification of the second embodiment, and shows the reagent container storage unit.

### DESCRIPTION OF EMBODIMENTS

In the present description, a reagent container used for inspecting a biological sample will be described as an example of a binding-member-attached reagent container, and a gene inspection device used for a gene inspection will be described as an example of an inspection device.

For example, the gene inspection device performs an inspection of a gene by amplifying a trace amount of nucleic acids such as deoxyribonucleic acid (DNA) or ribonucleic acid (RNA) contained in a biological sample using a reagent, then irradiating a solution containing the amplified nucleic acid (hereinafter, also referred to as "nucleic-acid-containing solution") with excitation light, and thus analyzing fluorescence emitted from the solution.

The gene inspection device can include, for example, a reagent container storage unit which stores a reagent container, a biological sample storage unit which stores a biological sample, a dispensing unit which dispenses a reagent in the reagent container and the biological sample in the biological sample storage unit to generate the nucleic-acid-containing solution, an amplification unit which amplifies the generated nucleic-acid-containing solution, and an inspection unit which inspects the amplified nucleic-acid-containing solution.

The binding-member-attached reagent container according to the present disclosure can be used, for example, as the reagent container stored in the reagent container storage unit described above. The inspection device according to the present disclosure can be used as, for example, the gene inspection device described above.

Hereinafter, embodiments of the binding-member-attached reagent container and the inspection device will be described with reference to the drawings, but the invention is not limited to the embodiments described in the drawings.

### Binding-Member-Attached Reagent Container

The binding-member-attached reagent container according to the present disclosure includes a plurality of reagent containers provided in series and in contact with each other, and a detachable strip-shaped binding member integrally surrounding the plurality of reagent containers. Hereinafter, the binding-member-attached reagent container will be described in detail.

### First Embodiment

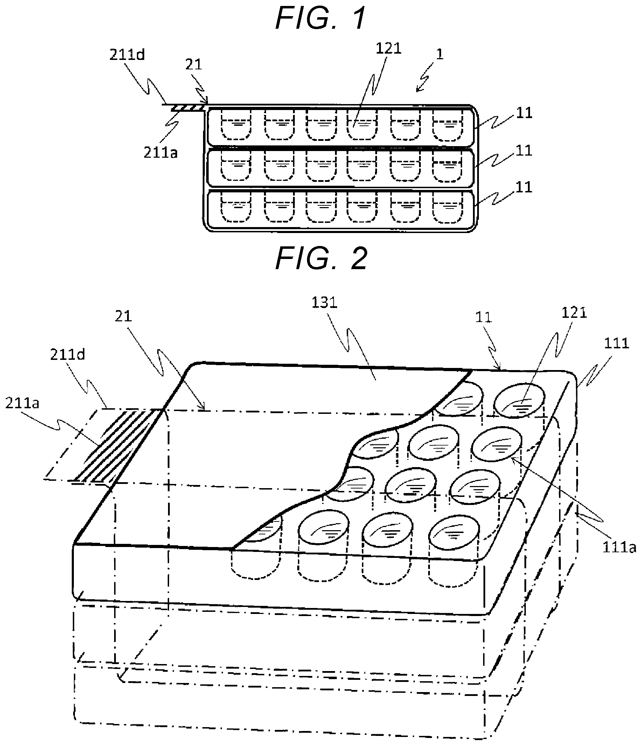

FIG. 1 is a schematic side view showing a first embodiment. As shown in FIG. 1, a binding-member-attached reagent container 1 schematically includes a plurality of reagent containers 11 and a binding member 21.

The plurality of reagent containers 11 are provided in series and in contact with each other. As shown in FIGS. 1 and 2, each of the reagent containers 11 can include, for example, a container body 111, a reagent 121, and a lid body 131.

The container body 111 stores the reagent 121. Specifically, the container body 111 has, for example, a well 111a for storing a single taking amount of the reagent 121. The well 111a is formed of a recessed container having an opening at an upper portion thereof.

A large number of wells 111a are usually provided in the container body 111, in order to allow many biological samples to be efficiently inspected. An arrangement of the wells 111a in the container body 111 is not particularly limited. The large number of wells 111a may be provided in, for example, a matrix shape.

The reagent 121 is stored in each of the wells 111a. The reagent 121 to be stored is not particularly limited. Examples of the reagent 121 include a reagent for amplifying a gene, a reagent necessary for nucleic acid extraction, and a reagent containing magnetic particles.

The lid body 131 is a member that covers the openings of the wells 111a. The lid body 131 is made of, for example, a material having a light shielding property and an oxygen impermeable property. The lid body 131 can be formed of, for example, a film-shaped member. The lid body 131 is fixed to the container body 111 in a state in which the lid body 131 can be peeled off or penetrated. When dispensing the reagent, the lid body 131 is peeled off from the container body 111 or penetrated, and accordingly, the reagent 121 is removed from the well 111a. Examples of the material for forming the lid body 131 include a metal material such as aluminum, and a multilayer composite material obtained by bonding thin layers of aluminum and polypropylene or the like.

The binding member 21 is a detachable strip-shaped member integrally surrounding the plurality of reagent containers 11. Specifically, for example, the binding member 21 can be formed of an elongated band having two end portions (hereinafter, also referred to as a "binding band 21") .

The binding band 21 binds the plurality of reagent containers 11 by, for example, integrally winding the reagent containers 11 along a peripheral direction (see an imaginary line 21 in FIG. 2) in which the reagent containers 11 are stacked. The binding band 21 is provided with a coupling portion 211a at an appropriate position such that the reagent containers 11 are not separated from each other. The strip-shaped member constituting the binding band 21 is coupled at the coupling portion 211a to annularly surround the plurality of reagent containers 11 and integrally fix the reagent containers 11.

Examples of a coupling mode of the coupling portion 211a include coupling using an adhesive or a pressure-sensitive adhesive, coupling in which the binding band 21 is overlapped and welded (heat-sealed), and coupling using a hook-and-loop fastener. Among the coupling modes, the coupling implemented by welding (heat-sealing) which does not require other materials is preferable. Accordingly, the reagent 121 can be further prevented from being contaminated.

The binding member 21 according to the present embodiment includes a gripping portion 211d that protrudes outward and is capable of being gripped. Specifically, for example, the gripping portion 211d may be provided by extending the end portion of the binding band 21 outward from the coupling portion 211a so as to be away from the reagent containers 11.

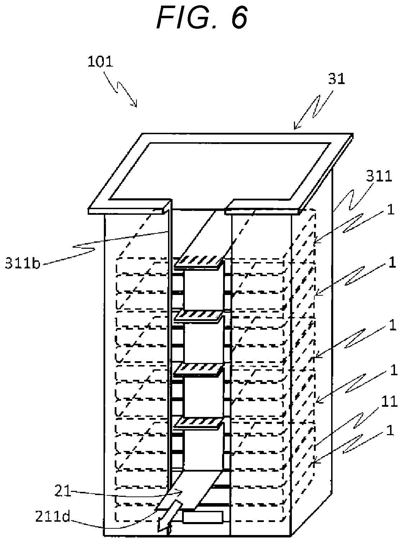

Since the binding member 21 according to the present embodiment includes the gripping portion 211d, for example, the binding member 21 can be removed (detached) from the plurality of reagent containers 11 by pulling one end of the binding member 21 in the protruding gripping portion 211d. Even in a state in which a plurality of binding-member-attached reagent containers 1 are stacked on each other, since the gripping portion 211d protrudes outward, the desired binding member 21 can be easily removed by pulling the protruding gripping portion 211d (see FIG. 6).

The binding member 21 may be provided with a label such as a bar code, in order to allow a type, a manufacturing lot number, and the like of the reagent to be grasped.

A material constituting the binding member 21 is not particularly limited as long as the binding member 21 can integrally surround the plurality of reagent containers 11. Examples of the above material include a resin material such as polyethylene terephthalate (PET). By using the above material, the reagent containers 11 can be easily bound (for example, welded by heat-sealing), and the desired detachable coupling portion can be reliably formed.

The binding-member-attached reagent container 1 is operated by, for example, a user gripping the gripping portion 211d of the binding member 21. In the binding-member-attached reagent container 1, the plurality of reagent containers 11 are integrally bound. Therefore, the user can handle the reagent containers 11 (for example, transport the reagent containers 11) without directly touching the reagent containers 11 by gripping only the gripping portion 211d.

The binding member 21 is formed to be detachable. Therefore, when the reagent containers 11 are to be used, the binding member 21 can be removed from the binding-member-attached reagent container 1 by releasing the coupling of the binding member 21 at the coupling portion 211a. A specific example in which the binding-member-attached reagent container 1 is applied to the inspection device will be described in detail in a section of Inspection Device.

As described above, since the binding-member-attached reagent container 1 has the above-described configuration, the plurality of reagent containers 11 can be integrally operated and the reagent 121 can be prevented from being contaminated without directly touching the reagent containers 11.

### Inspection Device

The inspection device according to the present disclosure is an inspection device allowing the above binding-member-attached reagent container to be loaded therein, and includes a storage rack having, at an upper portion thereof, a loading port through which the above binding-member-attached reagent container is loaded, and configured to allow the above binding-member-attached reagent container to be loaded such that the plurality of reagent containers described above are stacked in a vertical direction. The storage rack is provided with an opening portion such that the binding member of the loaded binding-member-attached reagent container is detachable from an outside. Hereinafter, the inspection device will be described in detail by using the gene inspection device as an example.

### Second Embodiment

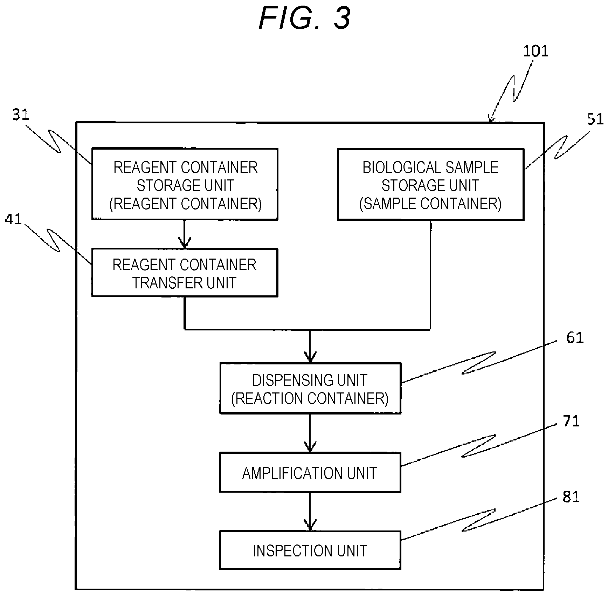

FIG. 3 is a schematic block diagram showing a second embodiment. As shown in FIG. 3, an inspection device 101 schematically includes a reagent container storage unit 31, a reagent container transfer unit 41, a biological sample storage unit 51, a dispensing unit 61, an amplification unit 71, and an inspection unit 81.

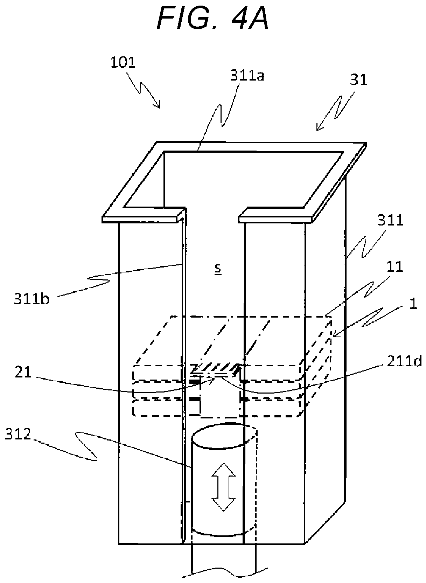

The reagent container storage unit 31 is a part in which the reagent containers 11 are stored by loading the binding-member-attached reagent container 1 having the above-described configuration in the section of Binding-Member-Attached Reagent Container. Specifically, as shown in FIG. 4A, the reagent container storage unit 31 can include, for example, a storage rack 311 and a reagent container lifting mechanism 312. Here, an example using the binding-member-attached reagent container 1 including the gripping portion 211d as shown in FIG. 1 will be described.

The storage rack 311 has, at an upper portion thereof, a loading port 311a through which the binding-member-attached reagent container 1 is loaded, and is a part into which the binding-member-attached reagent container 1 can be loaded such that the plurality of reagent containers 11 are stacked in the vertical direction. The storage rack 311 is provided with an opening portion 311b such that the binding member 21 of the loaded binding-member-attached reagent container 1 can be detached from the outside.

The loading port 311a of the storage rack 311 is formed to have a size corresponding to an outer shape of the reagent container 11 in a plan view. Inside the storage rack 311, an internal space s is provided in which the binding-member-attached reagent container 1 loaded from the loading port 311a can pass vertically downward and a movement of the binding-member-attached reagent container 1 in a horizontal direction can be restricted.

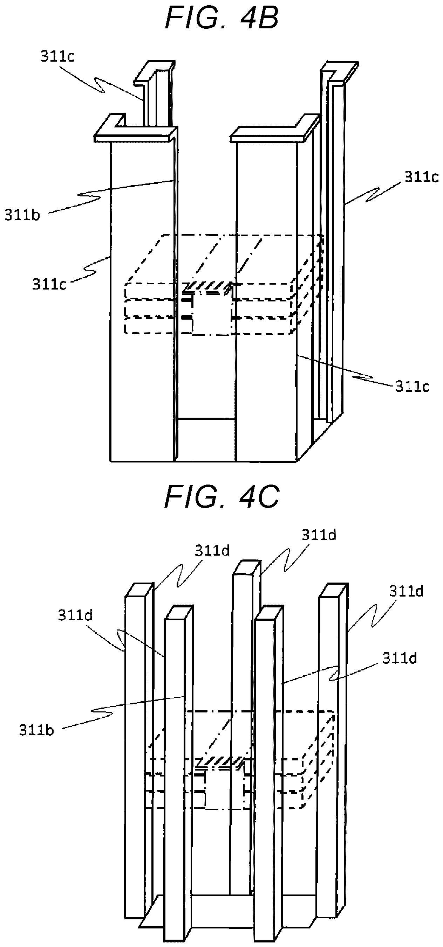

A shape of the storage rack 311 is not particularly limited as long as the loaded binding-member-attached reagent container 1 can be stored at a predetermined portion while moving along the vertical direction, and the movement of the binding-member-attached reagent container 1 in the horizontal direction can be limited. As the storage rack 311, for example, a storage rack (see FIG. 4A) having a shape in which three side surfaces except for a side surface provided with the opening portion 311b are covered, a storage rack (see FIG. 4B) having a shape in which substantially **L-**shaped support columns 311c are erected at four corners in the horizontal direction, a storage rack (see FIG. 4C) having a shape in which support columns 311d are erected around a periphery in the horizontal direction, or the like can be adopted.

The storage rack 31 may include a guide member (for example, a rail that guides the binding-member-attached reagent container 1 in the vertical upper-lower direction) that supports the movement of the binding-member-attached reagent container **1,** in order to allow the loaded binding-member-attached reagent container 1 to be smoothly and reliably moved.

The present embodiment includes the storage rack 311 whose three side surfaces are covered, and the opening portion 311b is provided in one side surface (see FIG. 4A).

A shape of the opening portion 311b is not particularly limited as long as a detachment operation of the binding member 21 can be performed through the opening portion 311b. Examples of the shape of the opening portion 311b include a slit-shaped opening portion (see FIG. 4A) that has an open upper end and is formed to extend substantially vertically downward from the open upper end.

In the present embodiment, the slit-shaped opening portion 311b as shown in FIG. 4A is adopted. According to the slit-shaped opening portion 311b, the binding member 21 can be normally gripped until the reagent containers 11 reach a storage portion in the storage rack 311, and the reagent containers 11 can be reliably stored.

In the present embodiment, the opening portion 311b is provided such that a part of the binding member 21 can protrude to the outside of the storage rack 311 through the opening portion 311b. Specifically, for example, the opening portion 311b may be formed such that the gripping portion 211d of the binding member 21 protrudes to the outside of the storage rack 311 through the opening portion 311b, and the user can grip the gripping portion 211d outside the storage rack 311. Accordingly, the binding member 21 can be easily operated, and the binding member 21 can be smoothly removed (detached) from the binding-member-attached reagent container **1.**

The reagent container lifting mechanism 312 is a mechanism that lifts the reagent containers 11 upward when removing the stored reagent containers 11 from the loading port 311a of the storage rack 311. As the reagent container lifting mechanism 312, for example, a cylinder-type lifter (see FIG. 4A) provided immediately below the storage rack 311 and capable of pushing the reagent containers 11 upward, a crane-type lifter (not shown) capable of lifting only the reagent container 11 positioned at an uppermost portion in the storage rack 311 while aspirating the reagent container 11 or the like can be adopted.

The reagent container storage unit 31 may include a binding member detector (not shown) capable of detecting the presence or absence of the binding member 21 on the stored reagent containers 11 in order to prevent the binding member 21 from being forgotten to be detached from the binding-member-attached reagent container 1 after the binding-member-attached reagent container 1 is loaded to a predetermined position in the internal space of the storage rack 311.

The reagent container transfer unit 41 independently transfers, to the dispensing unit 61, the reagent container 11 which is positioned uppermost among the reagent containers 11 lifted by the reagent container lifting mechanism 312. The reagent container transfer unit 41 can be implemented by a transfer unit such as a shuttle-type conveyor (not shown).

The biological sample storage unit 51 stores a sample container storing a biological sample solution containing nucleic acids to be inspected. The dispensing unit 61 takes the reagent 121 in the reagent container 11 transferred by the reagent container transfer unit 41 and the biological sample solution in the sample container stored in the biological sample storage unit 51, and injects the reagent 121 and the biological sample solution into a reaction container. The reagent 121 in the reagent container 11 may be taken after the lid body 131 is peeled off, or may be taken after the lid body 131 is penetrated. The amplification unit 71 amplifies the nucleic acids contained in the biological sample solution in the reaction container by heating, cooling, or the like using a heater, a Peltier device, or the like. The inspection unit 81 inspects the amplified nucleic acids in the reaction container. The nucleic acids can be inspected, for example, by analyzing fluorescence emitted from the solution containing the nucleic acids when being irradiated with excitation light.

The reagent container transfer unit 41, the biological sample storage unit 51, the dispensing unit 61, the amplification unit 71, and the inspection unit 81 may each employ a known technique.

Next, a method of using the binding-member-attached reagent container 1 in the inspection device 101 will be described. Here, a method of using the binding-member-attached reagent container 1 including the binding member 21 including the gripping portion 211d, and loading the binding-member-attached reagent container 1 into the storage rack 311 including the slit-shaped opening portion 311b which has the open upper end and which is formed to extend substantially vertically downward from the open upper end will be described as an example.

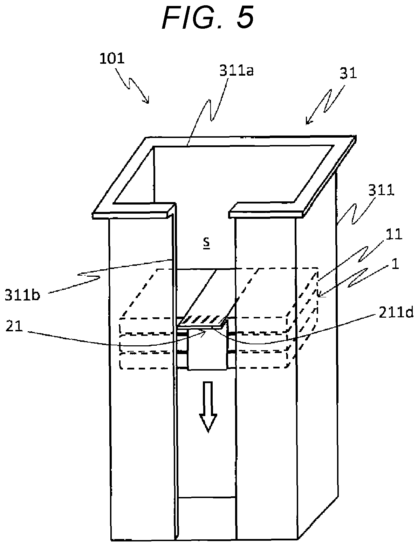

First, the binding-member-attached reagent container 1 in which the reagent 121 to be inspected is stored is loaded into the reagent container storage unit 31. Specifically, for example, the user loads the binding-member-attached reagent container 1 into the storage rack 311 from the loading port 311a provided in the upper portion of the storage rack 311 while gripping the gripping portion 211d of the binding-member-attached reagent container 1 by pinching the gripping portion 211d with one hand (for example, a thumb and an index finger). Next, as shown in FIG. 5, the user lowers the binding-member-attached reagent container 1 to a predetermined position in the storage rack 311 while gripping one end of the gripping portion 211d protruding from the opening portion 311b. At this time, the gripping portion 211d is moved along the opening portion 311b extending substantially vertically downward while being gripped. Accordingly, the plurality of reagent containers 11 (three reagent containers 11 are shown in FIG. 5 as an example) can be integrally operated (moved).

Next, another binding-member-attached reagent container 1 is loaded into the reagent container storage unit 31. The user performs similar operations on the above-described binding-member-attached reagent container 1 to load the other binding-member-attached reagent container 1 into the storage rack 311, and disposes the other binding-member-attached reagent container 1 such that a lower end portion of the other binding-member-attached reagent container 1 comes into contact with an upper end portion of the loaded binding-member-attached reagent container 1. Thereafter, the above operations are repeated until a predetermined number of reagent containers 11 are loaded into the storage rack 311.

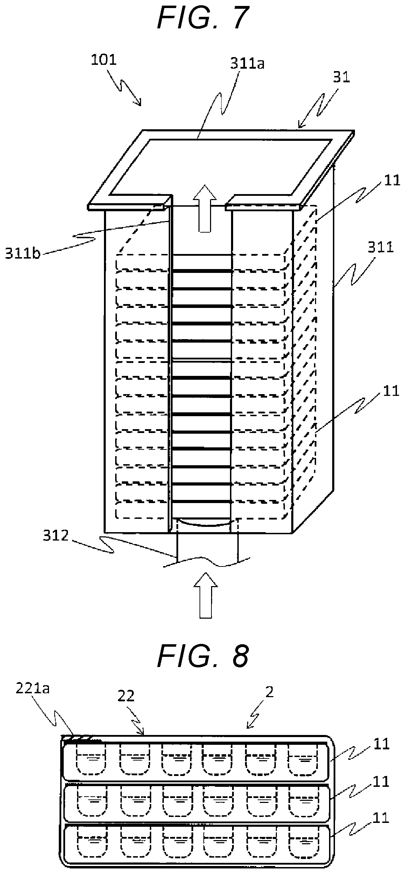

Next, the binding member 21 is removed from the binding-member-attached reagent container 1. Specifically, as shown in FIG. 6, the binding member 21 and the plurality of reagent containers 11 are separated (the binding member 21 is detached) by pulling the binding band 21 toward a user side (separating the binding member 21 from the plurality of reagent containers 11) while gripping the gripping portion 211d. By sequentially repeating this operation on each binding-member-attached reagent container 1, the reagent containers 11 are in a state of being independent from each other as shown in FIG. 7, and thus the reagent containers 11 can be individually operated. When the reagent container 11 is transferred by the reagent container transfer unit 41, only the uppermost positioned reagent container 11 lifted by the reagent container lifting mechanism 312 is transferred to the dispensing unit 61 by a transfer unit.

As described above, since the inspection device 101 has the above-described configuration, the plurality of reagent containers 11 can be efficiently stored in the storage rack 311, and the binding member 21 can be easily detached from the binding-member-attached reagent container 1 through the opening portion 311b after the binding-member-attached reagent container 1 is loaded into the storage rack 311. As a result, the reagent containers 11 can be smoothly and efficiently stored in the storage rack 311.

In this manner, the inspection device 101 can smoothly and efficiently store the plurality of reagent containers 11. Therefore, the inspection device 101 can be suitably applied to a gene inspection device for handling a large number of reagent containers 11, such as inspecting a biological sample containing nucleic acids.

The present disclosure is not limited to the configurations of the above-described embodiments, is indicated by the claims, and is intended to include all changes within the meaning and scope equivalent to the claims. A part of the configuration of the above-described embodiment may be deleted or replaced with another configuration, and another configuration may be added to the configuration of the above-described embodiment.

For example, in the first embodiment described above, the binding-member-attached reagent container 1 in which the binding member 21 includes the gripping portion 211d is described. However, the binding-member-attached reagent container may be a binding-member-attached reagent container including a binding member having no gripping portion protruding outward. Examples of such a reagent container include, for example, as shown in FIG. **8****,** a binding-member-attached reagent container 2 including a coupling portion 221a which does not include a protruding gripping portion and in which the plurality of reagent containers 11 are integrally wound and predetermined portions of a binding member 22 are coupled so as to overlap each other.

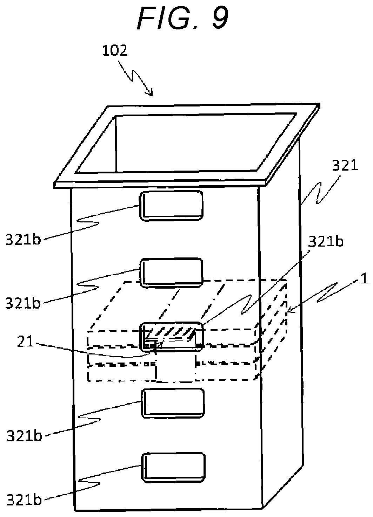

Further, in the second embodiment described above, the inspection device 101 including the storage rack 311 including the opening portion 311b that has the open upper end and is formed to extend substantially vertically downward from the open upper end is described. However, the opening portion may have any shape as long as the binding member of the stored binding-member-attached reagent container can be detached from the outside. Examples of such a storage rack include, for example, as shown in FIG. 9, an inspection device 102 or the like including a storage rack 321 including opening portions 321b provided at predetermined intervals along the vertical direction so as to correspond to positions where the binding members 21 of the loaded binding-member-attached reagent containers 1 are provided.

In the second embodiment described above, the example of the inspection device 101 using the binding-member-attached reagent container 1 including the gripping portion 211d is described. However, the binding-member-attached reagent container used in the inspection device may be any of those of the present disclosure. For example, when the binding-member-attached reagent container 2 as shown in FIG. 8 is used, the binding member 22 may be detached by the user putting his/her hand into the internal space of the storage rack through the opening portion of the storage rack.

In the second embodiment described above, the inspection device 101 is described by using the gene inspection device as an example. However, the inspection device according to the invention can be applied to any other inspection device as long as effects of the invention are not impaired.

## Claims

1. A binding-member-attached reagent container, comprising:
a plurality of reagent containers provided in series and in contact with each other; and
a detachable strip-shaped binding member integrally surrounding the plurality of reagent containers.

2. The binding-member-attached reagent container according to claim 1, wherein
the binding member includes a gripping portion that protrudes outward and is capable of being gripped.

3. An inspection device allowing the binding-member-attached reagent container according to claim 1 or 2 to be loaded therein, the inspection device comprising:
a storage rack having, at an upper portion thereof, a loading port through which the binding-member-attached reagent container is loaded, and configured to allow the binding-member-attached reagent container to be loaded such that the plurality of reagent containers are stacked in a vertical direction, wherein
the storage rack is provided with an opening portion such that the binding member of the loaded binding-member-attached reagent container is detachable from an outside.

4. The inspection device according to claim 3, wherein
the opening portion includes an open upper end and is formed to extend substantially vertically downward from the open upper end.

5. The inspection device according to claim 3, wherein
the opening portion is provided such that a part of the binding member is capable of protruding to an outside of the storage rack through the opening portion.
